**Europäisches Patentamt**

**European Patent Office**

**Office européen des brevets**

(19)

(11) Veröffentlichungsnummer : **0 507 762 A2**

## (12) EUROPÄISCHE PATENTANMELDUNG

(21) Anmeldenummer : **92890071.1**

(22) Anmeldetag : **27.03.92**

(51) Int. Cl.⁵ : **C21D 9/04**

(30) Priorität : **05.04.91 AT 729/91**

(43) Veröffentlichungstag der Anmeldung :
**07.10.92 Patentblatt 92/41**

(84) Benannte Vertragsstaaten :
**BE CH DE DK ES FR GB GR IT LI LU NL PT SE**

(71) Anmelder : **VOEST-ALPINE
Eisenbahnsysteme Gesellschaft m.b.H.
Floragasse 7
A-1040 Wien (AT)**

(72) Erfinder : **Blumauer, Johannes, Dipl.-Ing.
Bessemerstrasse 20
A-8740 Zeltweg (AT)**

(74) Vertreter : **Haffner, Thomas M., Dr.
Patentanwaltskanzlei Dipl.-Ing. Adolf
Kretschmer Dr. Thomas M. Haffner
Schottengasse 3a
A-1014 Wien (AT)**

(54) **Verfahren zur Herstellung eines Herzstückes.**

(57) Bei einem Verfahren zur Herstellung eines Herzstückes für Schienenweichen und Weichenkreuzungen mit einer Herzstückspitze aus Kohlenstoffstahl und Anschlußschienen, wird die Herzstückspitze gewalzt und einer Wärmebehandlung unterworfen, bei welcher die Herzstückspitze über ihren gesamten Querschnitt in ein feinperlitisches Gefüge umgewandelt wird, wobei hierauf die Herzstückspitze angelassen und zumindest im Radüberlaufbereich einer materialabhebenden Behandlung zur Abnahme des vom feinperlitischen Gefüge verschiedenen Radzonengefüges unterzogen wird und anschließend die Herzstückspitze mit Anschlußschienen verschweißt wird, wodurch die Herstellung eines Herzstückes vereinfacht wird und eine Wärmebehandlung in konventionellen Einrichtungen ermöglicht wird.

EP 0 507 762 A2

Die Erfindung bezieht sich auf ein Verfahren zur Herstellung eines Herzstückes für Schienenweichen und Weichenkreuzungen mit einer Herzstückspitze aus Kohlenstoffstahl und Anschlußschienen.

Für die Herstellung von Herzstücken sind verschiedene Verfahren bekannt geworden, bei welchen im wesentlichen an eine Herzstückspitze unmittelbar Anschlußschienen angeschweißt wurden oder aber diese Anschlußschienen unter Verwendung von Zwischenstücken mit der Herzstückspitze verbunden wurden. Herzstückspitzen werden üblicherweise als Gußstücke, insbesondere als Hartstahlgußstücke hergestellt. Bei Verwendung von Manganhartstahl werden üblicherweise Zwischenstücke verwendet, um nachteilige Gefügeveränderungen durch Diffusion beim Schweißvorgang zwischen Herzstückspitze und Anschlußschiene zu vermeiden. Nach dem Schweißvorgang wurde ein mehr oder minder aufwendiger Wärmebehandlungschritt zum Vergüten der Oberflächen angeschlossen und es ist beispielsweise aus der DE PS 25 41 978 bekannt, eine derartige Wärmebehandlung von Weichenteilen im Durchlaufverfahren vorzunehmen. Die Wahl eines derartigen Durchlaufverfahrens liegt insoferne nahe, als Herzstückspitzen mit bereits angeschweißten Anschlußschienen relativ große Bauteile darstellen, welche nicht ohne weiteres in einem Ofen wärmebehandelt werden können, ohne daß die Ofenabmessungen übermäßig groß gewählt werden müssen. Eine weitere Verfahrensweise zur Wärmebehandlung von Weichenteilen ist beispielsweise auch der AT-PS 384 624 zu entnehmen. Auch bei diesem Verfahren wurde durch relativ aufwendige Kontrolle der Wärmebehandlungsbedingungen eine geforderte Oberflächenqualität bzw. Härte erzielt.

Herzstücke können je nach konstruktiver Ausführung mit beweglicher Spitze oder beweglichen Flügelschienen und aus unterschiedlichen Materialien, wie beispielsweise aus Hartmanganstahl, Maraging-Stählen oder anderen hochverschleißfesten Werkstoffen gebildet werden. Bedingt durch die unterschiedlichen Querschnittsformen und durch die unterschiedliche Analyse derartiger Herzstückspitzen kann es bei der Herstellung der Spitzen zur Ausbildung von nicht-lamellaren Gefügestrukturen, wie Martensit oder dem Gefüge der unteren Zwischenstufe im Oberflächenbereich, kommen. Bedingt durch unterschiedliche Erwärmung im Härteverfahren tritt in der Folge Verzug hinzu, welcher im nachhinein beseitigt werden muß, soferne nicht spezielle Maßnahmen während der Erwärmung zur Vermeidung dieses Verzuges getroffen werden. Bisher konnten die geforderten Bedingungen der Erwärmung in Härteverfahren nur in einer Durchlaufhärtung nach erfolgter Verschweißung der Herzstückspitze mit dem Anschlußschienen beherrscht werden.

Die Erfindung zielt nun darauf ab, die Herstellung von Herzstücken der eingangs genannten Art zu vereinfachen und insbesondere die Wärmebehandlung zur Erzielung der gewünschten Gefüge und Oberflächenhärtung mit konventionellen Einrichtungen durchführen zu können. Zur Lösung dieser Aufgabe besteht das erfindungsgemäße Verfahren der eingangs genannten Art im wesentlichen darin, daß die Herstückspitze gewalzt und einer Wärmebehandlung unterworfen wird, bei welcher die Herzstückspitze über ihren gesamten Querschnitt in ein feinperlitisches Gefüge umgewandelt wird, daß hierauf die Herzstückspitze angelassen und zumindest im Radüberlaufbereich einer materialabhebenden Behandlung zur Abnahme des vom feinperlitischen Gefüge verschiedenen Radzonengefüges unterzogen wird, und daß anschließend die Herzstückspitze mit Anschlußschienen verschweißt wird. Dadurch, daß eine gewalzte Herzstückspitze zum Einsatz gelangt, können unterschiedliche Stahlqualitäten für die Herzstückspitze eingesetzt werden und dadurch, daß derartige Herzstückspitzen in der Folge bereits vor dem Verschweißen mit Anschlußschienen einer Wärmebehandlung unterworfen werden, kann eine derartige Wärmebehandlung in konventionellen Öfen vorgenommen werden. Darüberhinaus muß bei der Wärmebehandlung derartiger Herzstückspitzen dann keine übermäßige Sorgfalt aufgewandt werden, wenn, wie erfindungsgemäß vorgeschlagen, die Herzstückspitze angelassen und zumindest im Radüberlaufbereich einer materialabhebenden Behandlung unterworfen wird. Durch eine derartige materialabhebende Behandlung bzw. Bearbeitung können nämlich unerwünschte Gefüge in den Randzonen bzw. der Radlauffläche der Herzstückspitze beseitigt werden, wobei dies nach einem Anlassen erleichtert wird, und es kann ohne aufwendige Kontrolle der Temperaturbedingungen bei der Wärmebehandlung über den gesamten Querschnitt bei der nach der materialabhebenden Behandlung verbleibenden Herzstückspitze ein feinperlitisches Gefüge sichergestellt werden. Dadurch, daß eine derartige, über ihren gesamten Materialquerschnitt ein feinperlitisches Gefüge aufweisende Herzstückspitze in der Folge mit Anschlußschienen verschweißt wird, gelingt es, auch hier mit geringem Aufwand die entsprechenden Festigkeitseigenschaften auch im Bereich der Schweißnaht sicherzustellen, wobei lediglich nach dem Verschweißen eine entsprechende Wärmebehandlung der Schweißzone erforderlich ist, um Versprödungserscheinungen mit Sicherheit zu verhindern.

Mit Vorteil wird das erfindungsgemäße Verfahren so durchgeführt, daß die Schweißstelle nach der Verschweißung mit den Anschlußschienen mit Preßluft gekühlt und entgratet wird, worauf in besonders vorteilhafter Weise das Herzstück im Bereich der Schweißnaht nachgeglüht wird, wodurch auch im Bereich der Schweißnaht ein feinperlitisches Gefüge erhalten wird.

Die materialabhebende Behandlung zur Abnahme von unerwünschten Gefügen kann in besonders einfacher Weise durch Hobeln oder Fräsen vorgenommen werden, wobei mit Vorteil so vorgegangen wird, daß die Herzstückspitze in einem das Fertigmaß zumindest im Bereich der Radlauffläche übersteigenden Querschnitt-

2

smaß gewalzt wird und daß durch die materialabhebende Behandlung 1 bis 5 mm Oberflächenstärke abgetragen wird. Eine Abnahme einer Querschnittstiefe von 1 bis 5 mm, insbesondere 2 bis 3 mm, in Abhängigkeit vom Kohlenstoffgehalt des für die Herstellung der gewalzten Herzstückspitze verwendeten Stahles stellt sicher, daß auch an der Oberfläche der Herzstückspitze ein feines Perlitgefüge vorhanden ist, welches höchsten Verschleißwiderstand bietet. In an sich bekannter Weise können als Anschlußschienen und gegebenenfalls Flügelschienen kopfgehärtete Schienen eingesetzt werden.

Die Tatsache, da8 die Herzstückspitze und damit ein vergleichsweise kleiner Bauteil einer Wärmebehandlung unterworfen wird, erlaubt es, die Herzstückspitzen in einem Ofen über den gesamten Querschnitt auf Austenitisierungstemperatur, insbesondere Temperaturen zwischen 810° und 900°C, zu bringen. Nach entsprechender Haltezeit der Herzstückspitzen, welche bei den oben angeführten Temperaturen weitestgehend unkritisch ist, werden die Herzstückspitzen in ein temperierbares Abschreckmedium, insbesondere ein Ölwarmbad oder Salzbad, eingebracht und derart abgekühlt, daß sich ein Abkühlungsverlauf mit einer Abkühlgeschwindigkeit von 1 bis 7°C/s im Bereich von 800° bis 500°C einstellt. Die Temperatur des Abschreckmediums ist in einfacher Weise steuerbar, sodaß auf unterschiedliche Chargengewichte in besonders einfacher Weise Rücksicht genommen werden kann. Nach dem Abschrecken der Herzstückspitze kann ein neuerliches Entspannungsglühen bei 300° bis 550°C vorgenommen werden, wobei ein derartiges Entspannungsglühen bei 300° bis 550°C mit Vorteil in denjenigen Bereichen, in welchen Material nicht abgenommen wurde, zu angelassenem Martensit führt. Insgesamt wird somit mit relativ geringem Aufwand ein homogenes, feinperlitisches Gefüge in der Herzstückspitze erzielt, wobei mit Rücksicht auf die geringen Abmessungen der Herzstückspitzen eine Mehrzahl von Herzstückspitzen gemeinsam der Wärmebehandlung unterworfen werden kann, wodurch sich eine Rationalisierung und damit weitere Vereinfachung ergibt. Durch die Möglichkeit, gleichzeitig eine Mehrzahl von Herzstückspitzen der Wärmebehanalung zu unterwerfen, wird für eine Mehrzahl derartiger Herzstückspitzen im wesentlichen gleiches Gefüge sichergestellt, wohingegen bei den bekannten Verfahren der thermische Zyklus bei der nachfolgenden Wärmebehandlung im Durchlaufverfahren in der Regel Schwankungen unterworfen war, und unregelmäßige Gefügeausbildungen zur Folge haben konnte.

Für die Flügel- und Anschlußschienen können großserienmäßig kopfgehärtete Schienen herangezogen werden.

Als Herzstückspitzen-Werkstoff für die Herstellung einer gewalzten Herzstückspitze hat sich ein Stahl mit der Richtanalyse

| C | Si | Mn | P max | S max | in Gew |
|---|----|----|----|----|----|
| 0,7-0,85 | 0,3-0,5 | 0,8-1,5 | 0,04 | 0,04 | |

Rest Eisen, als besonders vorteilhaft herausgestellt. Mit einem derartigen Material für die Herzstückspitze lassen sich die nachfolgenden Materialeigenschaften mit hoher Konstanz erzielen:

| Oberflächenhärte | größer/gleich | 380 - 450 HV |
|---|---|---|
| Streckgrenze Re | " | 800 N/mm$^2$ |
| Zugfestigkeit Rm | " | 1200 N/mm$^2$ |
| Dehnung A | " | 10 % |
| Kerbschlagarbeit | " | 30 J DVMF |

Für die gewüschte Gefügeausbildung kann eine relativ niedrige Austenitisierungstemperatur, wie oben angeführt, gewählt werden, wodurch ein feineres Korn im Sekundargefüge erzielt wird, welches höhere Zähigkeit bei hoher Streckgrenze und Zugfestigkeit mit höherem Verschleißwiderstand verbindet. Die auf Grund der unterschliedlichen Querschnittsformen der Herzstückspitzen analysenspannenbedingt auftretenden, nicht lamellaren Gefügestrukturen, wie Martensit und untere Zwischenstufe im Oberflächenbereich, werden durch den der Wärmebehandlung nachgeschalteten Bearbeitungsprozeß ebenso wie eine gegenbenenfalls auftretende Entkohlung mit Sicherheit beseitigt, sodaß die gewünschten Oberflächen mit gegenüber dem Stand der Technik grösserer Sicherheit erzielt werden.

**Patentansprüche**

1. Verfahren zur Herstellung eines Herzstückes für Schienenweichen und Weichenkreuzungen mit einer herzstückspitze aus Kohlenstoffstahl und Anschlußschienen, dadurch gekennzeichnet, daß die herstückspitze gewalzt und einer Wärmebehandlung unterworfen wird, bei welcher die herzstückspitze über ihren gesamten Querschnitt in ein feinperlitisches Gefüge umgewandelt wird, daß hierauf die herzstückspitze angelassen und zumindest im Radüberlaufbereich einer materialabhebenden Behandlung zur Abnahme des vom feinperlitischen Gefüge verschiedenen Radzonengefüges unterzogen wird, und daß anschließend die herzstückspitze mit Anschlußschienen verschweißt wird.

2. Verfahren nach Anspruch 1, dadurch gekennzeichnet, daß die Schweißstelle nach der Verschweißung mit den Anschlußschienen mit Preßluft gekühlt und entgratet wird.

3. Verfahren nach Anspruch 1 oder 2, dadurch gekennzeichnet, daß das Herzstück im Bereich der Schweißnaht nachgeglüht wird.

4. Verfahren nach Anspruch 1, 2 oder 3, dadurch gekennzeichnet, daß die materialabhebende Behandlung durch hobeln bzw. Fräsen vorgenommen wird.

5. Verfahren nach einem der Ansprüche 1 bis 4, dadurch gekennzeichnet, daß die herzstückspitze in einem das Fertigmaß zumindest im Bereich der Radlauffläche übersteigenden Querschnittsmaß gewalzt wird und daß durch die materialabhebende Behandlung 1 bis 5 mm Oberflächenstärke abgetragen wird.

6. Verfahren nach einem der Ansprüche 1 bis 5, dadurch gekennzeichnet, daß als Anschlußschienen und gegebenenfalls Flügelschienen kopfgehärtete Schienen eingesetzt werden.